# FASCICULE DE BREVET EUROPEEN

(11) **EP 2 501 830 B1**
(45) Date de publication et mention de la délivrance du brevet: **03.01.2018**
(21) Numéro de dépôt: 10793005.9
(22) Date de dépôt: 17.11.2010
(51) Int. Cl.: C21D 9/56, F27D 3/02, B21B 27/03, C04B 35/571, C04B 35/83, C04B 35/565, C04B 35/80

(54) **ROULEAU COMPOSITE DE LIGNE DE RECUIT**
VERBUNDSTOFFWALZE EINER GLÜHLINIE
COMPOSITE ROLLER OF AN ANNEALING LINE

(30) Priorité: 20.11.2009 FR 0958203
(43) Date de publication de la demande: 26.09.2012
(73) Titulaire: Airbus Safran Launchers SAS, 75015 Paris (FR)
(72) Inventeur: LACOSTE, Marc, F-33170 Gradignan (FR); LACOMBE, Alain, F-33600 Pessac (FR); DREVET, Olivier, F-33320 Le Taillan Medoc (FR)
(74) Mandataire: Desormiere, Pierre-Louis
(86) Numéro de dépôt international: PCT/FR2010/052443
(87) Numéro de publication internationale: WO 2011/061446

(56) Documents cités:
- EP-A1- 2 025 422
- EP-A2- 0 864 548
- DE-A1- 19 948 739
- US-B2- 6 709 372

## Description

### Arrière-plan de l'invention

La présente invention se rapporte au domaine des rouleaux utilisés pour le transport, le guidage ou le façonnage de produits industriels et destinés à être soumis à des températures et gradients de température importants. L'invention concerne particulièrement, mais non exclusivement, des rouleaux pour lignes de recuit très haute température comme celles utilisées pour la fabrication d'acier au silicium très haute performance et dans lesquelles des températures supérieures à 1100°C sont atteintes.

Les tôles d'acier ayant très peu de tenue à de telles températures et une traction de la bande n'étant pas envisageable, il est donc nécessaire d'avoir un portage très resserré de la bande afin d'éviter son fluage et assurer son guidage. Par conséquent, la ligne de recuit très haute température doit comporter un rouleau tous les 0,5 m à 2 m. Chacun de ces rouleaux est en outre motorisé et l'ensemble de ces derniers synchronisé afin d'accompagner le déplacement de la bande sans effort de traction et en minimisant les frottements.

Les rouleaux utilisés dans ce type de ligne de recuit ont typiquement des diamètres, par exemple mais non exclusivement, de l'ordre de 100 mm et généralement inférieur à 500 mm, et une table de longueur comprise en général entre 500 mm et 3000 mm.

Les rouleaux utilisés dans ce type d'industrie sont en général réalisés en acier réfractaire avec des revêtements de surface (type céramique oxyde, zircone, silice, etc.) mais ne permettent pas de dépasser 1100°C dans les lignes de recuit et doivent être remplacés fréquemment (tous les 1 à 5 mois en général) en raison de leur usure.

Des rouleaux en céramique ou en graphite permettant des températures plus élevées sont en général utilisés. Cependant, ces rouleaux sont relativement fragiles, ce qui limite leur durée de vie. En outre, ces rouleaux requièrent en général l'utilisation d'un arbre métallique traversant pour assurer la tenue mécanique, arbre qui doit être refroidi pour faire face aux températures très élevées. La nécessité d'avoir un refroidissement actif complexifie l'installation et engendre une consommation en énergie importante.

L'invention concerne également les rouleaux présents dans des lignes de recuits de tôles d'acier traitées à des températures plus basses, typiquement entre 600°C et 900°C, mais qui sont soumises à des tractions importantes. Pour ce type de traitement, les rouleaux en acier sont couramment utilisés mais, de par leur coefficient de dilatation significatif, ils peuvent se déformer sous l'effet de la température, ce qui peut conduire dans certains cas à des formations de plis dans la tôle (communément appelés "heat buckles") ou à un mauvais guidage de celle-ci (déviation). Dans ce cas, ces rouleaux sont généralement d'un diamètre plus important, typiquement entre 500 mm et 1000 mm, la table pouvant atteindre 2000 mm.

Le document US 6 709 372 divulgue un rouleau de recuit destiné au transport d'une bande métallique dans une installation de recuit continu et dont la virole est réalisée soit en matériau composite carbone-carbone (C-C), c'est-à-dire un matériau formé d'un renfort en fibres de carbone densifié par une matrice en carbone, soit en matériau composite SiC-SiC, c'est-à-dire un matériau formé d'un renfort en fibres SiC densifié par une matrice SiC. Le document EP 2 025 422 décrit également un rouleau destiné à être utilisé dans des installations métallurgique ou sidérurgique à hautes températures et dont la virole est en matériau composite C-C. Le document EP 0 864 548 décrit un matériau composite formé d'un renfort fibreux en fibres de carbone densifié par une matrice SiC.

Si un rouleau ayant une virole en matériau composite C-C ou SiC-SiC possède des performances thermomécaniques meilleures qu'un rouleau ayant une virole en acier, l'utilisation de ces deux matériaux composites présentent toutefois des inconvénients.

En effet, les matériaux composites C-C, lorsqu'ils sont placés en atmosphère agressive lors de leur utilisation, sont susceptibles d'être dégradés par la corrosion s'attaquant au carbone du matériau. Une corrosion qui pose en pratique des problèmes particulièrement aigus est l'action de l'oxygène ou celle de l'eau, qui se manifeste lorsque les matériaux composites C-C sont placés à température élevée en présence d'air, d'humidité, etc. La cinétique d'oxydation du carbone, et en particulier celui de la matrice, s'accélère significativement en atmosphère oxydante dès que la température dépasse 400 °C, ce qui dégrade rapidement la résistance du matériau pour des utilisations de longues durées.

A cet effet il existe des rouleaux composites C-C qui comportent un revêtement de surface en SiC. Cependant, le revêtement de surface en SiC est sujet à l'écaillage sous l'effet, par exemple, de chocs, de sollicitations mécaniques ou thermomécaniques, ou d'amorce d'oxydation sous-jacente. L'écaillage conduit alors à la perte de l'intégrité du revêtement et à l'accélération du processus d'endommagement.

Par ailleurs, un des inconvénients des matériaux composites SiC-SiC est que le renfort est formé de fibres SiC qui sont des fibres coûteuses. Les fibres SiC présentent en outre l'inconvénient de se dégrader à haute température par modification de leur composition chimique, c'est-à-dire de façon irréversible. Ainsi, les fibres SiC ne sont en général pas utilisées au-delà de 1200°C, température à partir de laquelle leurs propriétés mécaniques ne sont plus garanties.

Or, il existe un besoin dans le domaine des installations sidérurgiques ou métallurgiques telles que les lignes de recuit continu de disposer de rouleaux aptes à fonctionner en atmosphère corrosive, et en particulier oxydante, à des températures élevées.

### Objet et résumé de l'invention

La présente invention a, par conséquent, pour but de proposer une nouvelle structure de rouleau apte à être exposé à une atmosphère oxydante et à des températures importantes, notamment supérieures à 1100°C, et ce avec une résistance mécanique supérieure à celle des rouleaux de l'art antérieur. L'invention vise également à proposer des rouleaux dont la géométrie extérieure ne varie pas sous l'effet de fortes températures et/ou lors de changements rapides de température, le rouleau ayant en outre une conception qui permet de remplacer les rouleaux existants sans modification des installations.

A cet effet, la présente invention concerne un rouleau de ligne de recuit continu selon la revendication 1. Avec une phase céramique présente dans tout le volume du matériau, toutes les surfaces accessibles de l'enveloppe du rouleau sont protégées, et ce même en cas d'usure ou d'endommagement d'une de ses surfaces. Une telle protection ne peut être obtenue avec un rouleau en C-C comportant un revêtement de surface, par exemple en céramique, car ce dernier n'est déposé que sur la surface externe de l'enveloppe laissant les autres parties de celles-ci exposées à la corrosion.

En outre, grâce à une dureté supérieure à celle d'une matrice carbone, la matrice céramique ou mixte (céramique+carbone) confère au rouleau une résistance à l'usure supérieure à celle d'un rouleau C-C.

Le matériau composite constitutif de l'enveloppe comprend en outre un renfort en fibres de carbone dont les propriétés mécaniques ne se dégradent pas à hautes températures, ce qui n'est pas le cas d'autres fibres telles que les fibres SiC.

L'enveloppe cylindrique du rouleau de l'invention, à savoir le corps du rouleau destiné à supporter les tôles à de hautes températures, est réalisée en un matériau composite, dit thermostructural, à savoir un matériau qui présente d'excellentes performances thermiques, mécaniques et thermomécaniques. Le rouleau de l'invention est, par conséquent, apte à fonctionner à des températures supérieures à celles supportées par l'acier, c'est-à-dire des températures supérieures à 1100°C et pouvant aller au-delà de 1300°C, et ce sans la fragilité présentée par la céramique ou le graphite. Le rouleau de l'invention ne requière pas l'utilisation d'un arbre mécanique et, par conséquent, permet de s'affranchir de l'utilisation d'un système de refroidissement actif, ce qui simplifie la mise en oeuvre de la ligne de recuit et en réduit son coût d'exploitation.

Les matériaux composites thermostructuraux présentent en outre des caractéristiques structurales (renfort fibreux densifié par une matrice) suffisantes pour résister aux charges supportées par les rouleaux de l'art antérieur. En outre, ces matériaux présentent un faible coefficient de dilatation thermique permettant d'éviter à l'enveloppe de se déformer sous l'effet de températures élevées et conserver la géométrie externe du rouleau lors des montées ou descentes en température. Ces caractéristiques combinées sont aussi particulièrement intéressantes pour fabriquer des rouleaux équipant les lignes de recuit de tôles traitées sous forte tension et hautes températures car elles permettent de limiter les risques de "heat buckles" et de déviation.

Afin de permettre l'adaptation du rouleau de la présente invention dans les installations existantes (par exemple dans des installations de recuit continu de tôles), le rouleau de l'invention conserve un élément de support axial en matériau métallique pouvant comprendre une ou deux fusées ou arbres pour le support et/ou l'entraînement du rouleau. Ainsi, les parties (paliers, arbres d'accouplement, etc.) des installations destinées à coopérer avec les rouleaux n'ont pas besoin d'être modifiées pour recevoir les rouleaux de l'invention, ce qui permet un échange standard des rouleaux existants par des rouleaux selon l'invention.

Par ailleurs, compte tenu de la faible masse et de la faible inertie du rouleau de l'invention par rapport aux rouleaux en acier, les puissances nécessaires à leur entraînement sont nettement inférieures, ce qui réduit les consommations énergétiques d'entraînement.

Toutefois, la ou les fusées étant en matériau métallique, elles possèdent un coefficient de dilatation thermique plus élevé que celui de l'enveloppe cylindrique, ce qui entraîne des dilatations différentielles entre ces éléments et l'enveloppe. Afin d'éviter des déformations de l'enveloppe cylindrique sous l'effet des dilatations de la ou des fusées, l'enveloppe est maintenue sur chaque fusée au moyen d'un élément de maintien comprenant une couronne ou une pluralité de segments de couronne fixés sur une extrémité de l'enveloppe, chaque couronne ou segment de couronne étant prolongé par au moins une languette élastique dont l'extrémité est en appui sur la fusée. Cette liaison élastique entre l'enveloppe cylindrique et les fusées permet de compenser les dilatations différentielles entre ces éléments aussi bien axialement que radialement.

Selon un aspect de l'invention, chaque fusée comprend en outre un arbre d'entraînement relié au mandrin par une portion tronconique, la ou les languettes élastiques de chaque couronne ou segment de couronne étant en appui sur la portion tronconique. La pente formée par la portion tronconique permet d'assurer des efforts de maintien suffisants par les languettes élastiques qu'elles que soient les sollicitations (en particulier thermiques) rencontrées.

Selon un mode de réalisation et afin de permettre l'entraînement en rotation de l'enveloppe par la ou les fusées, le mandrin de chaque fusée comprend une pluralité de dents et de cannelures en prise respectivement avec des cannelures et des dents de l'enveloppe. Dans ce cas, on ménage de préférence un premier un jeu radial à froid entre le sommet des dents de chaque mandrin et le fond des cannelures de l'enveloppe ainsi qu'un deuxième jeu radial à froid entre le sommet des dents de l'enveloppe et le fond des cannelures de chaque mandrin.

Ainsi, l'enveloppe cylindrique est couplée mécaniquement à la ou les fusées dans une configuration apte à compenser les dilatations différentielles entre ces éléments, ce qui permet d'assurer l'entraînement en rotation de l'enveloppe cylindrique sans risque de déformation de l'enveloppe.

Les dents et cannelures en vis-à-vis présentent des bords radiaux droits ou inclinées, formant, dans ce dernier cas, une configuration de type trapézoïdale plus stable pour auto-centrage du cylindre et des manchons.

Selon un aspect de l'invention, le rouleau comprend en outre un élément annulaire de renfort disposé autour de chaque couronne du ou des éléments de maintien. L'élément annulaire de renfort permet d'assurer la fixation des couronnes sur l'enveloppe notamment vis-à-vis des forces centrifuges et des vibrations auxquelles est soumis le rouleau en fonctionnement. Chaque élément annulaire de renfort peut être formé d'un collier élastique en matériau métallique précontraint ou d'un collier ou d'une bague en un matériau présentant un coefficient de dilatation thermique identique ou légèrement supérieur au matériau des couronnes.

Selon un autre mode de réalisation de l'invention, le rouleau comprend un mandrin en matériau métallique prolongé à chaque extrémité par une fusée, le mandrin comportant une pluralité de dents et de cannelures. L'enveloppe cylindrique est disposée autour du mandrin et comprend une pluralité de dents et de cannelures en prise respectivement avec les cannelures et les dents du mandrin. Afin de compenser les dilatations différentielles entre le mandrin et l'enveloppe, un premier jeu radial à froid est ménagé entre le sommet des dents du mandrin et le fond des cannelures de l'enveloppe et un deuxième jeu radial à froid est ménagé entre le sommet des dents de l'enveloppe et le fond des cannelures de chaque mandrin.

Selon un autre mode de réalisation de l'invention, le rouleau comprend deux fusées fixées de chaque côté de l'enveloppe, chaque fusée étant prolongée par un arbre en matériau métallique, les arbres et les fusées ayant une surface de contact de forme tronconique permettant d'accommoder les dilatations des arbres.

Selon encore un autre mode de réalisation de l'invention, le rouleau comprend un mandrin en matériau métallique prolongé à chaque extrémité par une fusée, l'enveloppe cylindrique étant reliée audit mandrin par deux bagues d'emmanchement coniques fixées respectivement de chaque côté du mandrin.

Selon un aspect de l'invention, l'enveloppe cylindrique comprend sur sa surface externe une couche de zircone, une couche de carbure de chrome, ou tout autre revêtement habituellement présent sur des rouleaux de lignes de recuit. Dans ce cas, avec le rouleau de l'invention, il n'est pas nécessaire, comme pour les rouleaux en C-C, d'appliquer une couche intermédiaire d'adaptation de type céramique, celle-ci étant déjà présente intrinsèquement à coeur du matériau du rouleau. Le nombre d'étapes nécessaires pour la réalisation d'un rouleau avec un tel revêtement est, par conséquent réduit.

Le renfort fibreux de l'enveloppe cylindrique est réalisé avec des fibres d'une longueur supérieure ou égale à 10 mm de manière à renforcer le caractère structural et la résistance mécanique de l'enveloppe.

La présente invention concerne également une ligne de recuit continu comprenant au moins un rouleau selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'un rouleau pour ligne de recuit haute température selon un mode de réalisation de l'invention ;
- la figure 1A est une d'une partie du rouleau de la figure 1 montrant une variante de réalisation d'un élément annulaire de renfort ;
- la figure 2 est vue une éclatée du rouleau de la figure 1 ;
- la figure 3 est une vue en coupe selon le plan III-III de la figure 4 ;
- la figure 4 est une vue en coupe d'une partie du rouleau de la figure 1 ;
- les figures 5 et 6 sont des vues en perspective respectivement de deux variantes de réalisation de l'élément de maintien élastique selon l'invention ;
- la figure 7 est une vue schématique d'un rouleau composite thermostructural selon un autre mode de réalisation de l'invention ;
- la figure 8 est une vue en coupe selon le plan II-II de la figure 7 ;
- la figure 9 est une vue schématique d'un rouleau composite thermostructural selon un autre mode de réalisation de l'invention ;
- la figure 10 est vue une éclatée d'une partie du rouleau de la figure 9 montrant le montage d'un arbre à une extrémité du rouleau ;
- la figure 11 est une vue schématique d'un rouleau composite thermostructural selon encore un autre mode de réalisation de l'invention ;
- la figure 12 représente un exemple de compensation de dilatations différentielles avec le rouleau de la figure 11 ;
- la figure 13 est une vue en coupe du rouleau de la figure 9.

### Description détaillée d'un mode de réalisation

Un domaine particulier mais non exclusif d'application de l'invention est celui des installations ou lignes de recuit continu dans lesquelles on traite des bandes de tôles métalliques, telles que des tôles d'acier très haute performance, à des températures supérieures à 1100°C. Comme expliqué précédemment, ces lignes de recuit continu comprennent des rouleaux qui peuvent être exposés à des environnement corrosifs et en particulier oxydants.

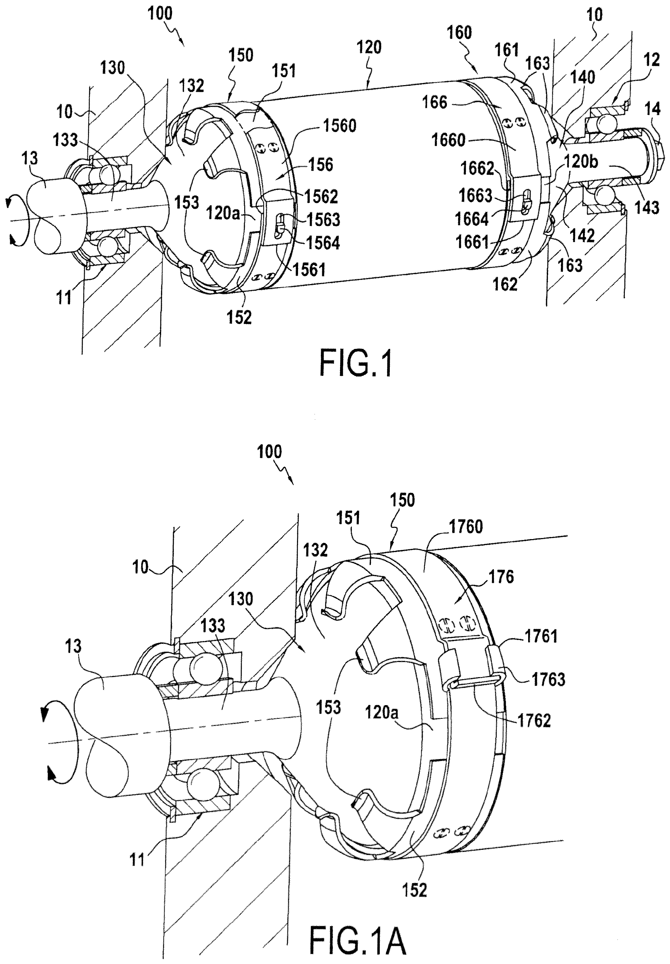

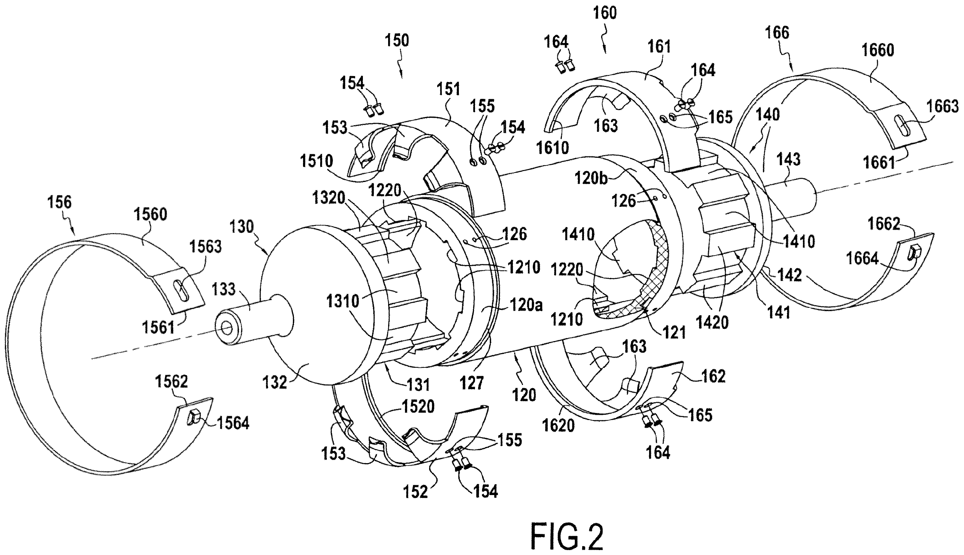

Les figures 1 et 2 illustrent un rouleau 100 conformément à un mode de réalisation de l'invention qui peut être utilisé indifféremment pour le transport, le guidage ou le façonnage de bande de tôles métalliques dans des lignes de recuit continu.

Le rouleau 100 comprend une table ou enveloppe cylindrique 120 et deux fusées 130 et 140 montées à chacune des extrémités de l'enveloppe cylindrique.

Afin d'assurer un fonctionnement fiable à des températures supérieures à 1100°C, qui ne sont pas supportables sans déformation pour des rouleaux métalliques, et ce tout en ayant une résistance mécanique supérieure à celle des céramiques ou du graphite, l'enveloppe cylindrique 120 est constituée d'une pièce axisymétrique 121 réalisée en matériau composite à matrice céramique (CMC) qui est remarquable par ses propriétés thermostructurales, sa capacité à conserver ces propriétés à des températures élevées et sa résistance à l'oxydation supérieure à celle du C-C.

Conformément à l'invention, les matériaux CMC qui peuvent être utilisés pour réaliser la pièce axisymétrique constituant l'enveloppe du rouleau de l'invention sont formés par un renfort fibreux en fibres de carbone qui est densifié par une matrice au moins partiellement en carbure de silicium. Comme expliqué ci-après, la présence d'une phase céramique à coeur dans le matériau constitutif de la pièce axisymétrique permet de conférer à ce dernier une bonne résistance vis-à-vis de l'oxydation. En effet, avec une phase céramique présente dans tout le volume du matériau, toutes les surfaces accessibles de l'enveloppe du rouleau sont protégées, et ce même en cas d'usure ou d'endommagement d'une de ses surfaces.

Dans le matériau CMC utilisé pour réaliser l'enveloppe du rouleau de l'invention, la phase céramique de la matrice est présente suivant un taux volumique moyen de préférence d'au moins 2%, plus préférentiellement d'au moins 5%, voire d'au moins 10%.

Les matériaux CMC peuvent aussi être réalisés avec des renforts en fibres céramiques, telles que des fibres SiC. Toutefois, dans la présente invention, on utilise des renforts en fibres de carbone car les caractéristiques mécaniques des fibres céramiques telles que les fibres SiC se dégradant à température élevée, par exemple à partir de 1200°C, alors qu'au contraire les caractéristiques mécaniques des fibres de carbone s'améliorent à haute température.

La pièce axisymétrique 121 constituant l'enveloppe 120 du rouleau de l'invention est de préférence réalisée en matériau composite carbone-carbone/carbure de silicium (C-C/SiC) qui est un matériau formé d'un renfort en fibres de carbone et densifié par une matrice comprenant une phase carbone et une phase carbure de silicium ou en matériau composite carbone-carbure de silicium (C-SiC) qui est un matériau formé d'un renfort en fibres de carbone densifié par une matrice en carbure de silicium. Dans le cas du matériau C-C/SiC, la première phase carbone de la matrice est déposée en premier afin d'être présente au plus près des fibres et recouverte ensuite par la deuxième phase SiC, ce qui permet de former sur la première phase carbone une couche de protection contre l'oxydation en SiC.

Les matériaux CMC, comme les matériaux C-SiC et C-C/SiC, sont des matériaux composites thermostructuraux, c'est-à-dire des matériaux caractérisés par leurs propriétés mécaniques élevées qui les rendent aptes à constituer des pièces de structure et par leur capacité à conserver ces propriétés mécaniques à des températures élevées pouvant aller jusqu'à plus de 1500°C. Le matériau CMC confère à l'enveloppe une résistance mécanique suffisante pour être autoporteuse, c'est-à-dire pour supporter les efforts auxquels est soumis le rouleau sans support intérieur.

Ce type de matériau présente un outre un faible coefficient de dilatation thermique (environ entre 3,5x10⁻⁶ °C et 4x10⁻⁶ °C pour le matériau C-SiC et C-C/SiC (le coefficient de dilatation thermique pouvant varier légèrement pour le C-C/SiC selon la répartition entre la phase carbone et la phase SiC de la matrice)) en comparaison à ceux des matériaux métalliques tels que l'acier (environ 12x10⁻⁶ °C et jusqu'à 20x10⁻⁶ °C aux températures de fonctionnement visées). Par conséquent, l'enveloppe 120 constituant la partie du rouleau 100 destinée à être en contact avec les tôles à traiter se dilate très peu sous l'effet de la température et ne se déforme pas de par ses caractéristiques mécaniques à hautes températures.

La pièce axisymétrique 121 constituant l'enveloppe 120 ne contient pas de silicium libre ou pur (i.e. Si seul) mais seulement sous forme de composé et en particulier de carbure SiC. Le matériau constitutif de la pièce axisymétrique est dépourvue de silicium libre car ce dernier est moins dur que le SiC, favorise le fluage et réduit la stabilité thermique du matériau.

La fabrication de pièces en matériau composite CMC est bien connue. Elle comprend principalement la réalisation d'une structure fibreuse en fibres de carbone, la mise en forme de la structure dans une forme voisine de celle de la pièce à fabriquer (préforme fibreuse) et la densification de la préforme par la matrice. La longueur des fibres utilisées pour former la structure fibreuse est supérieure ou égale à 10 mm et de préférence supérieure ou égale à 1 cm. En effet, en utilisant des fibres d'une longueur d'au moins 10 mm et plus, la pièce axisymétrique 121 constituant l'enveloppe 120 présente un bon caractère structural et une bonne résistance mécanique.

La préforme fibreuse constitue le renfort de la pièce dont le rôle est essentiel vis-à-vis des propriétés mécaniques. La préforme est obtenue à partir de textures fibreuses en fibres de carbone. Les textures fibreuses utilisées peuvent être de diverses natures et formes telles que notamment:
- tissu bidimensionnel (2D),
- tissu tridimensionnel (3D) obtenu par tissage 3D ou multicouches,
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes, câbles ou autres, lesquelles couches sont liées entre elles par exemple par couture, par implantation de fils ou d'éléments rigides ou par aiguilletage.

La mise en forme est réalisée par bobinage filamentaire, enroulage de nappe UD sur un mandrin, tissage, empilage, aiguilletage de strates bidimensionnelles/tridimensionnelles ou de nappes de câbles, etc.

La préforme fibreuse est ensuite densifiée, de façon bien connue, par voie liquide et/ou gazeuse.

La densification par voie liquide consiste à imprégner la préforme par une composition liquide contenant un précurseur du matériau de la matrice. Le précurseur se présente habituellement sous forme d'un polymère, tel qu'une résine, éventuellement dilué dans un solvant. La transformation du précurseur en carbone ou céramique est réalisée par traitement thermique, après élimination du solvant éventuel et réticulation du polymère. Plusieurs cycles d'imprégnation successifs peuvent être réalisés pour parvenir au degré de densification souhaité.

Une résine précurseur de céramique peut être par exemple une résine polycarbosilane précurseur de carbure de silicium (SiC), ou une résine polysiloxane précurseur de SiCO, ou une résine polyborocarbosilazane précurseur de SiCNB, ou une résine polysilazane (SiCN).

Dans le cas d'un matériau C-C/SiC, la préforme fibreuse est d'abord imprégnée avec une résine précurseur de la phase carbone de la matrice telle qu'une résine de type phénolique.

Après imprégnation, une préforme fibreuse destinée à constituer le renfort fibreux de la pièce à réaliser, et ayant une forme correspondant sensiblement à celle de cette pièce, est maintenue en forme par conformation de la texture fibreuse à l'aide d'un outillage de maintien.

La mise en forme de la préforme fibreuse peut être accompagnée d'un compactage de la structure fibreuse afin d'augmenter le taux volumique de fibres dans le matériau composite de la pièce à réaliser.

Après mise en forme de la préforme, la réticulation de la résine est réalisée, ou achevée s'il y a eu pré-réticulation, la préforme étant dans un outillage.

La résine polymérisée est alors transformée en carbone par traitement thermique.

Après la formation de cette phase carbone de la matrice, la préforme fibreuse est ensuite imprégnée avec une résine précurseur de céramique.

Après polymérisation, la résine est traitée thermiquement pour être transformée en céramique. En général, aucun outillage de maintien de l'ébauche n'est nécessaire, celle-ci étant suffisamment solidifiée par la matrice carbone précédemment déposée.

Les opérations d'imprégnation et de polymérisation de résine précurseur de carbone et/ou de résine précurseur de céramique peuvent être répétées plusieurs fois si nécessaire pour obtenir des caractéristiques mécaniques déterminées.

La densification de la préforme fibreuse peut-être également réalisée, de façon connue, par voie gazeuse par infiltration chimique en phase vapeur de la matrice (CVI). La préforme fibreuse correspondant à la structure à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au coeur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

Dans le cas d'un matériau C-SiC, un précurseur gazeux de SiC peut être du méthyltrichlorosilane (MTS) donnant du SiC par décomposition du MTS. Dans le cas d'un matériau C-C/SiC, la première phase carbone peut être formée avec des gaz hydrocarbures tels que méthane et/ou propane donnant le carbone par craquage, la deuxième phase SiC étant ensuite déposée sur la première phase carbone, par exemple par décomposition du MTS.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

Selon un aspect de l'invention, l'enveloppe cylindrique 120 peut comprendre en outre un revêtement (non représenté sur les figures 1 et 2) qui permet notamment d'éviter la carburation du métal des tôles par la pièce axisymétrique 121. Un tel revêtement de surface peut être notamment constitué d'une couche de carbure de chrome, de zircone, ou autre. Les couches de carbure de chrome et de zircone peuvent être réalisées par diverses techniques de dépôt connues comme, par exemple, le dépôt sous vide PVD ("Physical Vapor Déposition"), projection plasma, etc..

Les fusées 130 et 140 sont réalisées en matériau métallique, par exemple en acier du type Inox. Chaque fusée 130, respectivement 140, comprend un mandrin 131, respectivement 141, une portion tronconique 132, respectivement 142, qui est prolongée par un arbre 133, respectivement 143.

Dans l'exemple ici considéré, le rouleau 100 est disposé à l'intérieur d'une enceinte 10 d'une ligne de recuit continu (figure 1). Les arbres 133 et 143 sont respectivement supportés par des paliers 11 et 12 de l'enceinte 10. Dans le mode de réalisation de la figure 1, l'arbre 133 est accouplé avec un moteur d'entraînement en rotation 13 tandis que l'arbre 143 est maintenu dans le palier 12 par un écrou 14.

Comme illustrée sur la figure 2, la fusée 130 comprend une série de cannelures 1310 réparties de façon annulaire sur la surface externe du mandrin 131 et délimitant une série de dents 1320. De même, le mandrin 141 de la fusée 140 comporte une série de cannelures 1410 uniformément réparties sur la surface externe de ce dernier et délimitant une série de dents 1420.

La pièce axisymétrique 121 en matériau CMC de l'enveloppe cylindrique 120 comporte une série de cannelures 1210 réparties de façon annulaire sur sa surface interne et délimitant une série de dents 1220. Les cannelures 1210 peuvent être directement formées lors de la fabrication de la pièce en matériau composite par conformation du renfort fibreux ou après la fabrication de la pièce en usinant sa surface interne.

Les fusées 130 et 140 sont montées à chaque extrémité de l'enveloppe cylindrique 120 en engageant, d'une part, les dents 1320 et 1420 respectivement des fusées 130 et 140 dans les cannelures 1210 ménagées sur la surface interne de la pièce axisymétrique 121 de l'enveloppe 120 et, d'autre part, les dents 1220 de l'enveloppe cylindrique 120 dans les cannelures 1310 et 1410 respectivement des fusées 130 et 140.

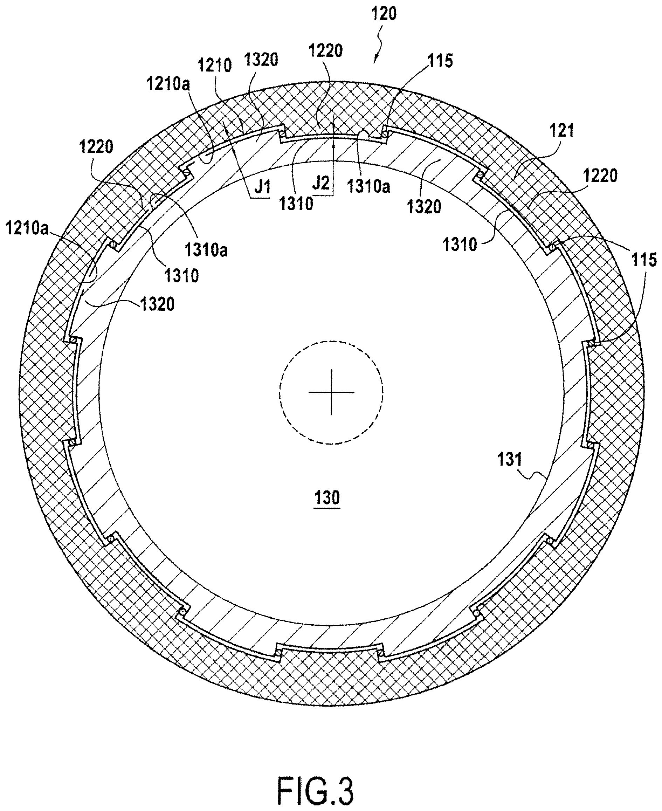

Comme représenté sur la figure 3, le mandrin 131 de la fusée 130 est positionné à l'intérieur de l'enveloppe cylindrique 120 en ménageant un jeu radial entre les surfaces en regard de ces deux éléments. Plus précisément, le mandrin 131 et la pièce axisymétrique 121 de l'enveloppe 120 sont dimensionnés de manière à ménager, d'une part, un jeu radial J1 entre le sommet des dents 1320 et le fond 1210a des cannelures 1210 de la pièce 121 en regard des dents 1320 et, d'autre part, un jeu radial J2 entre le sommet des dents 1220 de la pièce 121 et le fond 1310a des cannelures 1310 du mandrin 131.

Les jeux radiaux J1 et J2 correspondent à des jeux "à froid", c'est-à-dire des jeux seulement présents lorsque le rouleau est à température ambiante et qui sont définis pour être comblés lors de la dilatation des fusées à la température de fonctionnement du rouleau.

Bien que non représentés sur la figure 3, des jeux similaires sont également ménagés, d'une part, entre le sommet des dents 1420 de la fusée 140 et le fond 1210a des cannelures 1210 de la pièce 121 en regard des dents 1420 et, d'autre part, entre le sommet des dents 1220 de la pièce 121 et le fond des cannelures 1410 du mandrin 141.

Ainsi, bien que la pièce 121 de l'enveloppe cylindrique 120 en matériau composite thermostructural présente un coefficient de dilatation bien inférieur à celui du mandrin en matériau métallique, les dilatations différentielles entre ces deux éléments sont compensées grâce à la présence du jeu radial entre l'enveloppe 120 et les mandrins 131 et 141 des fusées 130 et 140.

Lors des montées en température, le mandrin se dilate radialement dans les jeux ménagés sans exercer d'effort sur l'enveloppe, ce qui permet d'éviter la déformation de cette dernière.

Les mandrins des fusées peuvent être engagés dans l'enveloppe cylindrique sans moyen de maintien en position radiale, la mise en position radiale des mandrins dans l'enveloppe cylindrique, ou plus précisément la mise en position des dents et cannelures respectives des mandrins et de l'enveloppe, se faisant automatiquement lors de la dilatation des fusées à la température de fonctionnement du rouleau.

Toutefois, comme dans l'exemple décrit ici, l'enveloppe 120 peut être maintenue à froid en position radiale sur les mandrins au moyen de cales de réglage 115, qui sont respectivement disposées entre les bords adjacents des dents 1220 et des cannelures 1310 ou 1410. Afin de ne pas gêner la dilatation des mandrins dans les jeux ménagés, les cales de réglages 115 sont réalisées en un matériau fugitif de manière à disparaître lors des montées en température.

Le couplage mécanique entre l'enveloppe cylindrique 120 et le mandrin 110 est réalisé par mise en prise des dents 1320 et 1420 avec les bords adjacents des cannelures 1210 via éventuellement les cales de réglages 115 lorsqu'elles sont présentes.

Conformément à l'invention, l'enveloppe cylindrique 120 est en outre bridée en translation sur les fusées 130 et 140 au moyen d'éléments de maintien élastiques 150 et 160 disposés à chaque extrémité de l'enveloppe cylindrique 120.

Dans le mode de réalisation présenté dans la figure 2, chaque élément de maintien élastique 150, respectivement 160, est formé de deux segments de couronne 151 et 152, respectivement 161 et 162 prolongés par des languettes ou pattes élastiques 153, respectivement 163. Chaque segment de couronne 151, 152, 161 et 162 peut être formé à partir d'une pièce métallique conformée et usinée de manière à former les languettes élastiques 153 et 163. Les éléments de maintien élastiques 150 et 160 peuvent être notamment réalisés en matériaux métalliques hautes caractéristiques tels que des aciers réfractaires du type 15CDV6, 25CD4S, ou 28CDV5 ou bien en Inox.

Les éléments de maintien élastiques 150 et 160, à savoir dans le mode de réalisation décrit ici les segments de couronne 151, 152 et 161, 162, sont fixés respectivement aux deux extrémités 120a et 120b de l'enveloppe 120 tandis que les languettes élastiques de ces éléments exercent une pression de maintien sur les fusées 130 et 140. Plus précisément, les languettes élastiques 153 des deux segments 151 et 152 sont en appui sur la portion tronconique 132 de la fusée 130 tandis que les languettes élastiques 163 des deux segments de couronne 161 et 162 sont en appui sur la portion tronconique 142 de la fusée 140.

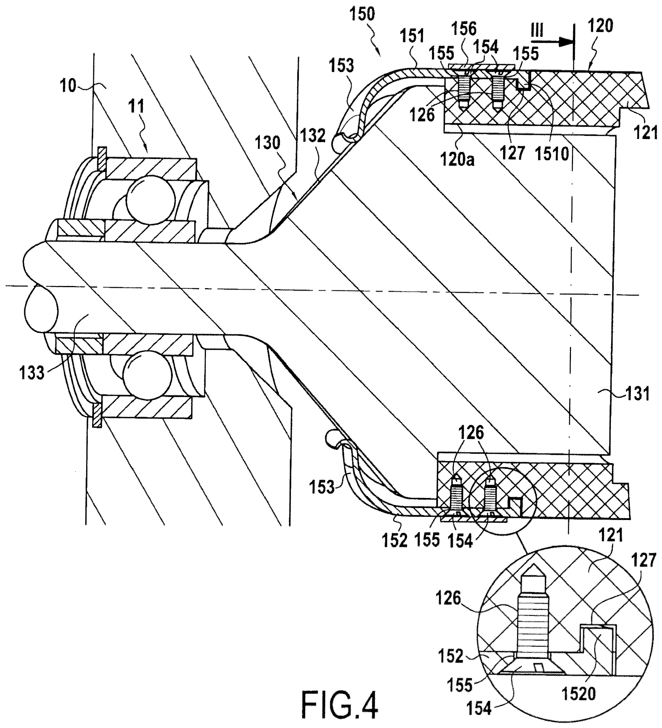

Comme illustré sur la figure 4, les segments de couronne 151 et 152 sont fixés sur l'extrémité 120a de l'enveloppe 120 par des vis 154 qui traversent les segments de couronne 151 et 152 via des orifices de passages 155 et qui sont serrées dans des portions filetées 126 réalisées dans l'enveloppe 120. De même, les segments de couronne 161 et 162 sont fixés sur l'extrémité 120b de l'enveloppe 120 par des vis 164 qui traversent les segments de couronne 161 et 162 via des orifices de passages 165 et qui sont serrées dans des portions filetées réalisées dans l'enveloppe 120 (figure 2). Afin de faciliter le montage des segments de couronne sur l'enveloppe 120, celles-ci peuvent comprendre un talon, tel que les talons 1510 et 1520 des segments de couronne 151 et 152 représentées sur la figure 4, qui est positionné dans un logement ménagé dans l'enveloppe 120, tel que la gorge 127 représentée sur la figure 4.

Les segments de couronne peuvent être également fixées par un clinquant ou autre. L'homme du métier envisagera sans difficultés d'autres moyens pour fixer les éléments de maintien élastiques sur l'enveloppe cylindrique.

Comme illustré sur la figure 1, le rouleau 100 comprend en outre deux éléments annulaires de renfort 156 et 166 disposés respectivement autour des segments de couronne 151, 152 et 161, 162. Dans l'exemple présente ici, chaque élément annulaire de renfort 156, respectivement 166, est constitué d'un collier ou bague élastique 1560, respectivement 1660, réalisé à partir d'une bande de feuillard métallique, par exemple en acier à hautes caractéristiques élastiques. Chaque collier élastique est monté en précontrainte sur les segments de couronne correspondants, c'est-à-dire en agrandissant lors du montage le diamètre du collier par écartement des ces deux extrémités 1561 et 1562, respectivement 1661 et 1662, puis en relâchant les extrémités après positionnement ce qui crée un couple de rappel élastique utilisé comme serrage. L'extrémité 1562 comporte en outre un tenon 1564 engagé dans une lumière 1563 ménagée dans l'extrémité 1561, ce qui permet d'assurer la retenue des deux extrémités 1561 et 1562 l'une par rapport à l'autre.

La figure 1A illustre une variante de réalisation d'un élément annulaire de renfort 176 formé d'un collier 1760 monté en précontrainte autour des segments de couronne 151, 152 et dont la retenue de ses deux extrémités 1761 et 1762 est assurée par la coopération entre une portion recourbée de l'extrémité 1762 et des oreilles 1763 formant butée.

Lors des montées en température le collier pourra se déformer par glissement relatif entre les extrémités qui se chevauchent tout en maintenant le couple de serrage. Dans une variante de réalisation, l'élément annulaire de renfort peut être formé d'un collier ou bague fendu monté en précontrainte sur les couronnes, le collier ou la bague étant réalisé en matériau métallique (par exemple en acier). Dans ce cas, les extrémités de chaque collier ne se chevauchent pas mais s'écartent plus ou moins l'une de l'autre suivant les températures rencontrées.

Selon encore une autre variante de réalisation, l'élément de renfort peut être formé d'un collier ou bague réalisé en un matériau ayant un coefficient de dilatation thermique similaire ou très légèrement supérieur à celui du matériau des couronnes. Dans ce cas, il n'est pas nécessaire de prévoir la possibilité d'une déformation élastique pour l'élément de maintien en raison de l'absence de dilatations différentielles entre les couronnes et l'élément annulaire de renfort.

D'autres dispositifs tels que des colliers de type "serflex" peuvent être envisagés.

Les éléments de maintien élastiques 150 et 160 permettent de maintenir de façon équilibrée l'enveloppe cylindrique 120 en position longitudinale sur les portions tronconiques 132 et 142 des fusées 130 et 140 tout en absorbant les variations axiales dues aux dilatations thermiques différentielles entre les fusées et l'enveloppe. Lors de montées en température, les fusées 130 et 140 se dilatent tandis que l'enveloppe cylindrique 120 conserve son volume en raison de son faible coefficient de dilatation. Toutefois, grâce aux portions tronconiques 132 et 142 et les languettes élastiques 153 et 163 en appui sur ces dernières, les dilatations des fusées n'entraînent pas de déformation de l'enveloppe cylindrique. En effet, lors de la dilatation des fusées, les languettes élastiques se déforment légèrement et glissent sur les portions tronconiques des fusées avec lesquelles elles sont en contact et assurent ainsi un maintien en position axiale de l'enveloppe tout en compensant les dilatations différentielles. Lors du refroidissement, c'est-à-dire lors de la rétractation des fusées, le maintien axial de l'enveloppe est toujours assuré grâce au retour élastique des languettes. Le profil ou la pente des portions tronconiques 132 et 142 est défini en fonction de l'amplitude de la dilatation des fusées à absorber. Si les fusées se dilatent peu, les portions tronconiques pourront présenter une pente importante afin d'assurer un bon maintien de l'enveloppe à toutes les températures par les languettes élastiques. Au contraire, si les fusées se dilatent de façon plus importante, les portions tronconiques présenteront une pente plus faible afin de permettre un glissement sur une distance plus grande des languettes de manière à assurer le maintien de l'enveloppe sans exercer d'efforts trop importants sur cette dernière.

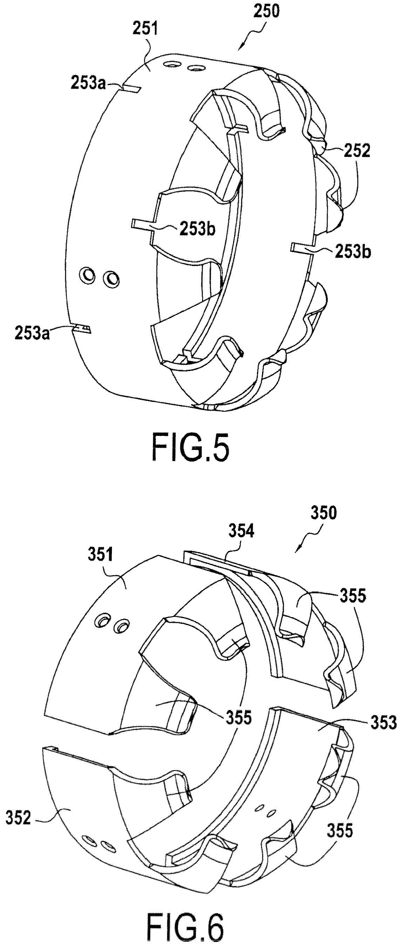

Les éléments de maintien élastiques de l'invention ne sont pas limités à une structure formée de deux segments de couronne. Comme illustrée sur la figure 5, un élément de maintien 250 peut être formé d'une seule couronne 251 comportant des languettes élastiques 252 réparties uniformément autour d'une extrémité de ladite couronne. Dans ce cas, comme illustrée sur la figure 5, la couronne 251 peut comporter des fentes partielles 253a et 253b réparties de façon uniforme et en quinconce autour afin de compenser les contraintes lors d'éventuelles dilatations de la couronne.

Selon une autre variante de réalisation illustrée à la figure 6, un élément de maintien 350 est formé de quatre segments de couronne 351 à 354 comportant chacune des languettes élastiques 355. Quel que soit le nombre de segments utilisés pour former les éléments de maintien élastiques (1, 2, 4, etc.), le ou les segments sont fixés aux extrémités de l'enveloppe cylindrique de la même façon que décrite ci-avant.

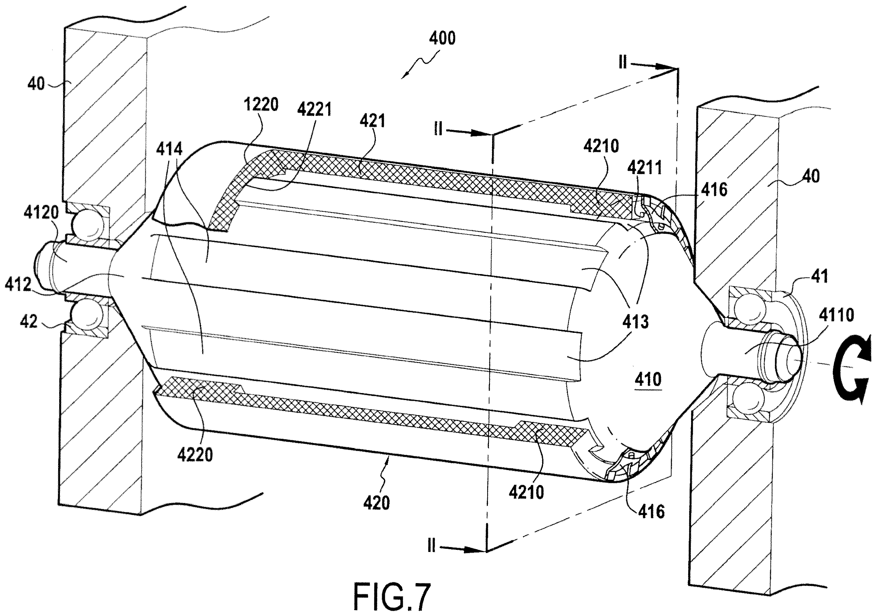

La figure 7 illustre un rouleau 400 conformément à un autre mode de réalisation d'un rouleau selon l'invention.

Le rouleau 400 comprend en tant qu'élément de support axial un mandrin 410 dont chaque extrémité est prolongée par une fusée 411, respectivement 412. Les fusées 411 et 421 comprennent chacune à leur extrémité un arbre 4110, 4120. Dans l'exemple ici considéré, le rouleau 400 est disposé à l'intérieur d'une enceinte 40 d'une ligne de recuit continu. Les arbres 4110 et 4120 des fusées 411 et 412 sont respectivement supportées par des paliers 41 et 42 de l'enceinte 40. Le ou les arbres 4110, 4120 peuvent en outre être accouplés avec des moyens d'entraînement en rotation (non représentés).

Le rouleau 400 comprend en outre une enveloppe cylindrique 420 destinée à former la paroi externe du rouleau. L'enveloppe cylindrique 420 est constituée d'une pièce axisymétrique 421 qui est réalisée conformément à l'invention en matériau composite CMC, c'est-à-dire un matériau formé d'un renfort fibreux en fibres de carbone qui est densifié par une matrice au moins partiellement céramique comme décrit ci-avant. La pièce axisymétrique peut en outre comprendre un revêtement de surface constitué, par exemple, d'une couche de carbure de chrome ou de zircone.

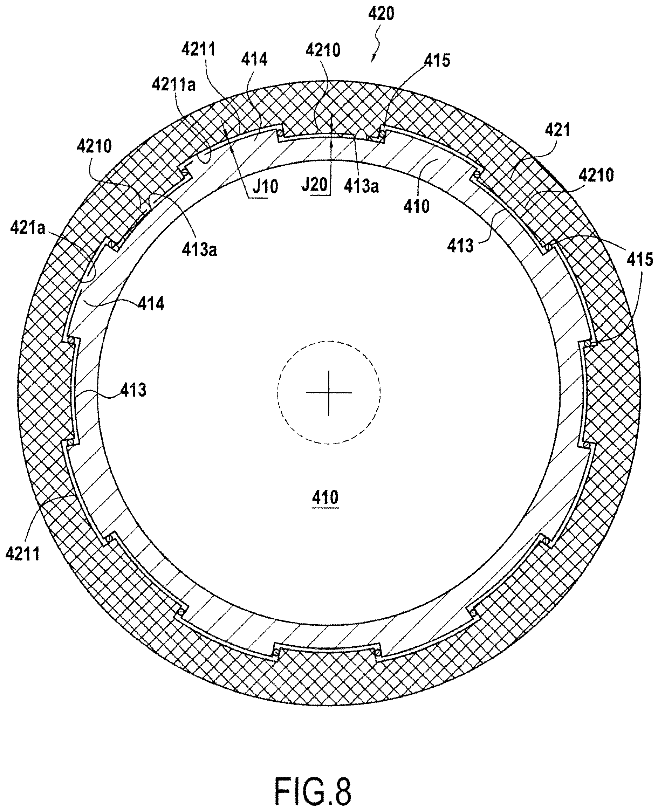

Comme illustrée sur les figures 7 et 8, la pièce 421 présente sur sa surface interne deux séries de cannelures 4211 et 4221 définissant respectivement deux séries de dents 4210 et 4220. Les dents 4210, respectivement 4220, sont réparties de façon annulaire sur la surface interne de la pièce axisymétrique 421 et alignées deux à deux suivant l'axe de cette pièce.

L'enveloppe cylindrique est disposée autour du mandrin 410 en engageant les séries de dents 4210 et 4220 dans des cannelures 413 formées sur la surface externe du mandrin 410, par exemple par usinage. Les cannelures 413 sont réparties uniformément autour du mandrin et définissent entre elles des dents 414 qui sont engagées avec les cannelures 4211 et 4221.

Comme représentée sur la figure 8, l'enveloppe cylindrique 420 est positionnée autour du mandrin 410 en ménageant un jeu radial à froid entre les surfaces en regard de ces deux éléments. Plus précisément, le mandrin 410 et la pièce axisymétrique 421 de l'enveloppe 420 sont dimensionnés de manière à ménager, d'une part, un premier jeu radial à froid J10 entre le sommet des dents 414 et le fond 4211a des cannelures 4211 (et le fond des cannelures 4221) de la pièce 421 en regard de ces dents et, d'autre part, un deuxième jeu radial à froid J20 entre le sommet des dents 4210 (et des dents 4220) et le fond 413a des cannelures 413. Ainsi, bien que la pièce 421 en matériau composite thermostructural présente un coefficient de dilatation bien inférieur à celui du mandrin en matériau métallique, les dilatations différentielles entre ces deux éléments sont compensées grâce à la présence du jeu radial entre l'enveloppe 420 et le mandrin 410.

Lors des montées en température, le mandrin se dilate radialement dans les jeux ménagés sans exercer d'effort sur l'enveloppe, ce qui permet d'éviter la déformation de cette dernière. Le mandrin peut être engagé dans l'enveloppe cylindrique sans moyen de maintien en position radiale, la mise en position radiale des mandrins dans l'enveloppe cylindrique se faisant automatiquement lors de la dilatation des fusées à la température de fonctionnement du rouleau. Toutefois, comme dans l'exemple décrit ici, l'enveloppe 420 peut être maintenue à froid en position radiale sur les mandrins au moyen de cales de réglage 415, qui sont respectivement disposées entre les bords adjacents des dents 4220 et des cannelures 4310 ou 4410. Afin de ne pas gêner la dilatation des mandrins dans les jeux ménagés, les cales de réglages 415 sont réalisées en un matériau fugitif de manière à disparaître lors des montées en température.

Le couplage mécanique entre l'enveloppe cylindrique 420 et le mandrin 410 est réalisé par mise en prise des dents 4210 et 4220 avec les bords adjacents des cannelures 413. L'enveloppe cylindrique 420 est en outre bridée en translation sur le mandrin 410 au moyen d'éléments de maintien élastiques 416 disposés à chaque extrémité de l'enveloppe cylindrique 420. Les éléments 416 sont fixés sur le mandrin 410 tandis que les lames élastiques de ces éléments exercent un pression de maintien sur l'enveloppe. Les éléments de maintien élastiques 416 permettent de maintenir de façon équilibrée l'enveloppe cylindrique 420 en position longitudinale sur le mandrin 410.

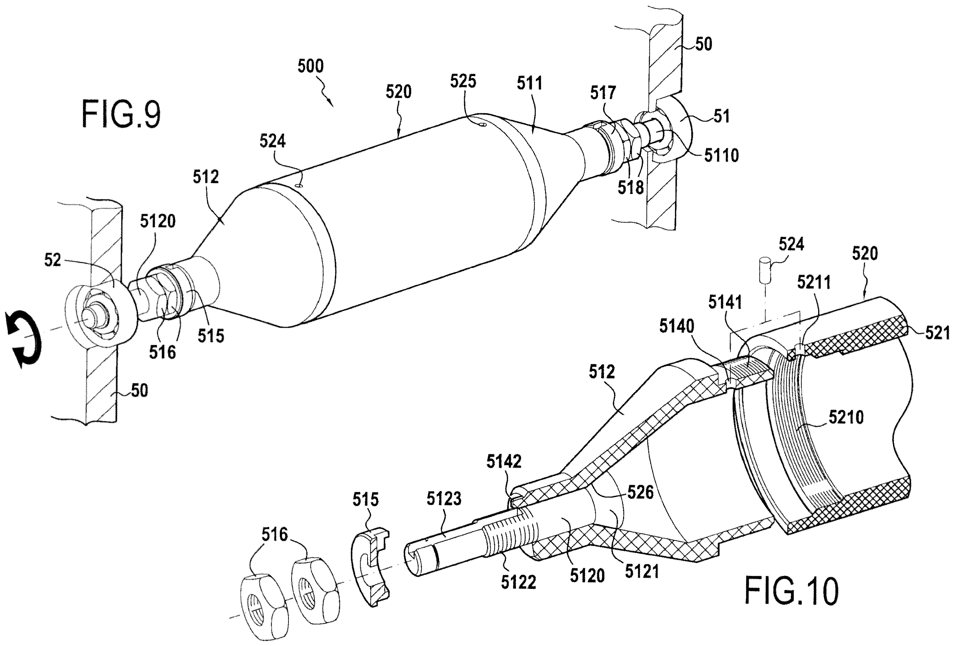

On décrit maintenant en relation avec les figures 9 et 10, un autre mode de réalisation d'un rouleau selon l'invention. Les figures 9 et 10 illustrent un rouleau 500 qui diffère notamment du rouleau 400 décrit précédemment en ce qu'il comprend une enveloppe cylindrique 520 qui est autoporteuse, c'est-à-dire qui présente une structure suffisamment résistante pour supporter les efforts auxquels est soumis le rouleau sans support intérieur. A cette effet, l'enveloppe cylindrique 520 est constituée d'une pièce axisymétrique 521 réalisée en en matériau composite CMC conformément à l'invention, c'est-à-dire un matériau formé d'un renfort fibreux en fibres de carbone qui est densifié par une matrice au moins partiellement en carbure de silicium comme décrit ci-avant et qui, grâce à son caractère thermostructural, confère à l'enveloppe une résistance mécanique suffisante pour être autoporteuse. La pièce axisymétrique peut en outre comprendre un revêtement de surface constitué, par exemple, d'une couche de carbure de chrome ou de zircone.

Le rouleau 500 comprend deux arbres 5110 et 5120 respectivement supportés par des paliers 51 et 52 d'une enceinte 50 d'une ligne de recuit continu.

Les arbres 5110 et 5120 sont respectivement reliés à l'enveloppe cylindrique 520 par des fusées 511 et 512. Plus précisément, comme représenté sur la figure 10, l'arbre 5120 est disposé à l'intérieur de la fusée 512 du côté de son extrémité de petit diamètre. L'arbre 5120 présente à une extrémité une portion évasée 5121 qui joue le rôle de butée et, à l'autre extrémité, une portion filetée 5122 et une rainure 5123 dépassant à l'extérieur de la fusée 512. La fusée 512 comprend à son extrémité de grand diamètre un filetage 5141 destiné à coopérer avec un filetage 5210 réalisé sur la paroi interne de la pièce axisymétrique 521. La fusée 512 est vissé sur la pièce 521 de l'enveloppe 520 puis solidarisée avec cette dernière par une goupille 524 fixée dans des orifices 5211 et 5140 formés respectivement dans l'enveloppe 520 et dans l'élément tronconique 514. L'arbre 512 est solidarisé en rotation avec la fusée 512 par un crabot 515 qui est engagé à la fois avec la rainure 5123 de l'arbre 512 et avec un ergot 5142 de la fusée 512. Le serrage du crabot 515 ainsi que de l'arbre 512 est assuré par deux écrous 516 coopérant avec le filetage 5122 de l'arbre.

De même, l'arbre 5110 est assemblé à l'autre extrémité de l'enveloppe 520 au moyen de la fusée 511 qui est vissé sur l'enveloppe 520 et solidarisée avec cette dernière par une goupille 525. Toujours de la même manière que décrite pour l'arbre 5120, l'arbre 5110 est solidarisé en rotation à la fusée 511 par un crabot 517 et deux écrous 518.

L'homme du métier envisagera sans difficulté d'autres variantes de réalisation pour la fixation et la solidarisation des arbres sur les éléments tronconiques.

Les arbres 5110 et 5120 sont réalisés en matériau métallique tel que de l'acier et les fusées 511 et 512 sont réalisés en matériau composite thermostructural et de préférence en un matériau identique à celui de la pièce 521.

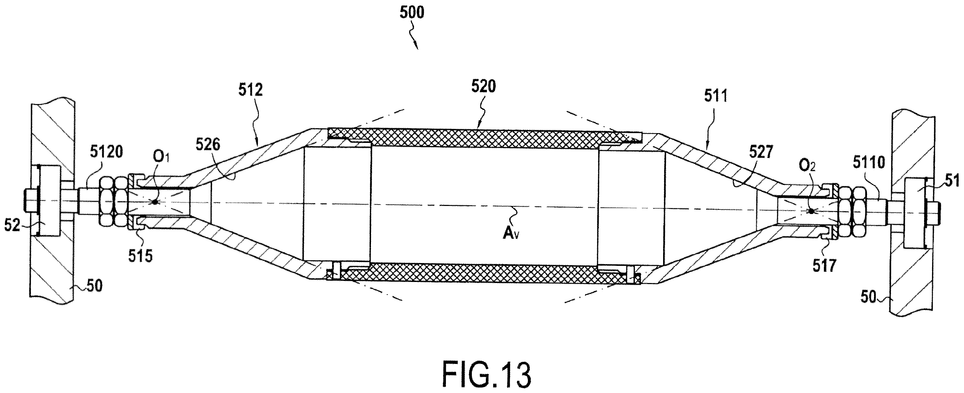

Lors de montées en température, les arbres 5110 et 5120 se dilatent tandis que l'enveloppe cylindrique 520 conserve son volume en raison de son faible coefficient de dilatation. Toutefois, grâce aux éléments tronconiques, les dilatations des arbres n'entraînent pas de déformation de l'enveloppe cylindrique. En effet, comme représentées sur la figure 13, les surfaces de contact 526, 527 entre les arbres et les éléments tronconiques ont chacune un centre de symétrie (génératrice) O₁, O₂ qui coïncide avec l'axe Av de l'enveloppe cylindrique et, par conséquent, du rouleau. Comme les arbres 5110 et 5120 se dilatent à la fois radialement et axialement, leur augmentation de volume se fait vers l'intérieur des fusées 511 et 512 qui présentent un volume interne croissant en raison de leur forme tronconique. Ainsi, la dilatation des arbres n'entraîne pas de déformation de l'enveloppe cylindrique.

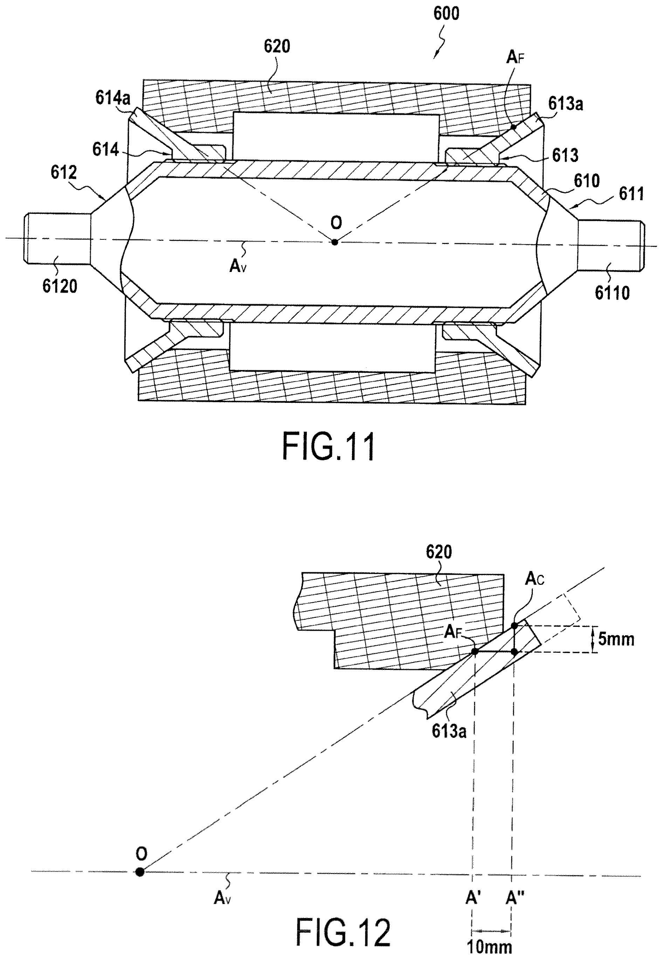

La figure 11 illustre une variante de réalisation d'un rouleau selon l'invention comprenant, comme le rouleau 500 décrit précédemment, une enveloppe cylindrique autoporteuse. Plus précisément, la figure 11 représente un rouleau 600 comprenant un mandrin 610 en acier dont chaque extrémité est munie d'une fusée 611, respectivement 612, prolongée par un arbre 6110, respectivement 6120. Le rouleau 600 comprend en outre une enveloppe cylindrique 620 autoporteuse réalisée en matériau composite CMC conformément à l'invention, c'est-à-dire un matériau formé d'un renfort fibreux en fibres de carbone qui est densifié par une matrice au moins partiellement en carbure de silicium comme décrit ci-avant.

L'enveloppe cylindrique 620 est reliée au mandrin 610 par deux bagues d'emmanchement coniques 613 et 614 qui sont respectivement vissées de chaque côté du mandrin. L'enveloppe cylindrique 620 est maintenue autour du mandrin 610 par contact avec les portions coniques 613a et 614a respectivement des bagues 613 et 614. De même que pour le rouleau 500 décrit précédemment, les dilatations différentielles entre les parties du rouleau en acier et l'enveloppe cylindrique en matériau CMC, sont compensées par le fait que les parties en contact avec l'enveloppe cylindrique sont constituées par les portions coniques 613a et 614a dont les génératrices ou centres de symétrie O coïncident avec l'axe de l'enveloppe cylindrique Av.

Un exemple de ce principe de compensation est illustré sur la figure 12 qui montre les déplacements relatifs des pièces du rouleau 600 dans le cas d'une montée en température à 1000 °C environ. La tangente OA_{F} correspond à la génératrice de la portion conique 613a de la bague d'emmanchement conique 613 au niveau de sa surface de contact avec l'enveloppe cylindrique. Le point O correspond au point de coïncidence entre les génératrices des portions coniques des bagues 613 et 614 et l'axe de l'enveloppe cylindrique 620. Le mandrin est réalisé avec un acier ayant un coefficient de dilatation thermique de 10x10⁻⁶ °C tandis que l'enveloppe cylindrique est réalisée en matériau C-C/SiC qui présente un coefficient de dilatation compris entre 2x10⁻⁶ °C et 4x10⁻⁶ °C. La tangente OA_{F} correspond à l'hypoténuse d'un triangle rectangle dont les deux autres côtés sont les distances OA' et A_{F}A'. A la température de 1000°C, la portion 613a se dilate (dans le sens radial et axial), ce qui correspond à un allongement de la distance OA_{F} par déplacement du point A_{F} au point A_{C}. A cette température, la distance OA' augmente de 10 mm (distance axiale A'A") tandis que la distance A_{F}A' augmente de 5 mm (distance radiale A_{C}A"). On constate que le déplacement du point A_{F} au point A_{C} s'est fait dans le prolongement de la tangente OA_{F}, c'est-à-dire suivant la génératrice qui coïncide avec le point O situé sur l'axe du rouleau.

## Revendications

1. Rouleau (100) de ligne de recuit continu comprenant au moins une fusée ou un arbre d'entraînement (130; 140) et une enveloppe cylindrique (120) **caractérisé en ce que** l'enveloppe cylindrique (120) est en matériau composite à matrice céramique (CMC) formé d'un renfort en fibres de carbone densifié par une matrice au moins partiellement en carbure de silicium, une phase de la matrice en carbure de silicium étant présente dans tout le volume du matériau composite de l'enveloppe.

2. Rouleau selon la revendication 1, **caractérisé en ce que** l'enveloppe cylindrique (120) est réalisée en matériau composite carbone-carbure de silicium ou carbone-carbone/carbure de silicium

3. Rouleau selon la revendication 1 ou 2, **caractérisé en ce que** chaque fusée (130; 140) est en matériau métallique et **en ce que** ledit rouleau comprend en outre au moins un élément de maintien (150; 160) de l'enveloppe (120) sur la fusée (130; 140), ledit élément comprenant une couronne ou une pluralité de segments de couronne (151, 152; 161, 162) fixés sur une extrémité de ladite enveloppe, chaque couronne ou segment de couronne étant prolongé par au moins une languette élastique (153; 163) dont l'extrémité est en appui sur la fusée.

4. Rouleau selon l'une quelconque des revendications 1 à 3, **caractérisé en ce que** chaque fusée comprend en outre une portion tronconique (132; 142) prolongée par un arbre d'entraînement (133; 143), la ou les languettes élastiques (153; 163) de chaque couronne ou segment de couronne (151, 152; 161, 162) étant en appui sur ladite portion tronconique.

5. Rouleau selon l'une quelconque des revendications 1 à 4, **caractérisé en ce que** chaque fusée comprend en outre un mandrin (131; 141) comportant une pluralité de dents (1320; 1420) et de cannelures (1310; 1410) et **en ce que** l'enveloppe cylindrique (120) comprend une pluralité de dents (1220) et de cannelures (1210) en prise respectivement avec les cannelures et les dents de chaque mandrin.

6. Rouleau selon la revendication 5, **caractérisé en ce qu'**un premier jeu radial à froid (J1) est ménagé entre le sommet des dents (1320; 1420) de chaque mandrin (131; 141) et le fond des cannelures (1210) de l'enveloppe (120) et **en ce qu'**un deuxième jeu radial à froid (J2) est ménagé entre le sommet des dents (1220) de l'enveloppe (120) et le fond des cannelures (1310; 1410) de chaque mandrin (131; 141).

7. Rouleau selon l'une quelconque des revendications 1 à 6, **caractérisé en ce qu'**il comprend en outre un élément annulaire de renfort (156; 166) placé autour de chaque couronne ou chaque pluralité de segments de couronne (151, 152; 161, 162).

8. Rouleau selon la revendication 7, **caractérisé en ce que** l'élément annulaire de renfort (156; 166) comprend un collier élastique (1560, 1660) en matériau métallique précontraint.

9. Rouleau selon la revendication 7, **caractérisé en ce que** l'élément annulaire de renfort comprend un collier réalisé en un matériau présentant un coefficient de dilatation égale ou légèrement supérieur au coefficient de dilatation thermique de la couronne ou des segments de couronne.

10. Rouleau selon la revendication 1 ou 2, **caractérisé en ce qu'**il comprend un mandrin (410) en matériau métallique prolongé à chaque extrémité par une fusée (411, 412), ledit mandrin comportant une pluralité de dents (414) et de cannelures (413) et **en ce que** l'enveloppe cylindrique (420) est disposée autour du mandrin (410) et comprend une pluralité de dents (4210, 4220) et de cannelures en prise respectivement avec les cannelures et les dents du mandrin.

11. Rouleau selon la revendication 10, **caractérisé en ce qu'**un premier jeu radial à froid est ménagé entre le sommet des dents du mandrin et le fond des cannelures de l'enveloppe et **en ce qu'**un deuxième jeu radial à froid est ménagé entre le sommet des dents de l'enveloppe et le fond des cannelures de chaque mandrin.

12. Rouleau selon la revendication 1 ou 2, **caractérisé en ce que** ledit rouleau comprend deux fusées fixées de chaque côté de ladite enveloppe, chaque fusée étant prolongée par un arbre en matériau métallique, les arbres et les fusées ayant une surface de contact de forme tronconique.

13. Rouleau selon la revendication 1 ou 2, **caractérisé en ce que** ledit rouleau comprend un mandrin en matériau métallique prolongé à chaque extrémité par une fusée, l'enveloppe cylindrique étant reliée audit mandrin par deux bagues d'emmanchement coniques fixées respectivement de chaque côté du mandrin.

14. Rouleau selon l'une quelconque des revendications 1 à 13, **caractérisé en ce que** l'enveloppe cylindrique comprend sur sa surface externe une couche de zircone ou une couche de carbure de chrome.

15. Ligne de recuit continu **caractérisée en ce qu'**elle comprend au moins un rouleau selon l'une quelconque des revendications 1 à 14.

## Patentansprüche

1. Walze (100) einer kontinuierlichen Glühlinie, umfassend zumindest einen Achsschenkel oder eine Antriebswelle (130; 140) und eine zylindrische Hülle (120), **dadurch gekennzeichnet, dass** die zylindrische Hülle (120) aus einem Keramikmatrix-Verbundwerkstoff (CMC) besteht, der aus einer Verstärkung aus Kohlefasern gebildet ist und durch eine zumindest teilweise aus Siliziumkarbid bestehende Matrix verdichtet ist, wobei eine Phase der Matrix aus Siliziumkarbid im Gesamtvolumen des Verbundmaterials der Hülle vorhanden ist.

2. Walze gemäß Anspruch 1, **dadurch gekennzeichnet, dass** die zylindrische Hülle (120) aus Verbundstoff Kohlenstoff-Siliziumkarbid oder Kohlenstoff-Kohlenstoff/Siliziumkarbid hergestellt ist.

3. Walze gemäß Anspruch 1 oder 2, **dadurch gekennzeichnet, dass** jeder Achsschenkel (130; 140) aus einem metallischen Material besteht und dass die Walze ferner mindestens ein Halteelement (150; 160) der Hülle (120) auf dem Achsschenkel (130; 140) umfasst, wobei dieses Element einen Kranz oder eine Vielzahl von Kranzsegmenten (151, 152; 161, 162) umfasst, die an einem Ende der Hülle befestigt sind, wobei jeder Kranz oder jedes Kranzsegment durch mindestens eine elastische Lasche (153; 163) verlängert ist, deren Ende am Achsschenkel aufliegt.

4. Walze gemäß einem der Ansprüche 1 bis 3, **dadurch gekennzeichnet, dass** jeder Achsschenkel ferner einen kegelstumpfartigen Abschnitt (132; 142) aufweist, der durch eine Antriebswelle (133; 143) verlängert ist, wobei die elastische(n) Lasche(n) (153; 163) jedes Kranzes oder Kranzsegments (151, 152; 161, 162) auf dem kegelstumpfartigen Abschnitt aufliegt (aufliegen).

5. Walze gemäß einem der Ansprüche 1 bis 4, **dadurch gekennzeichnet, dass** jeder Achsschenkel ferner einen Dorn (131; 141) mit einer Vielzahl von Zähnen (1320; 1420) und Rillen (1310; 1410) umfasst, und dass die zylindrische Hülle (120) eine Vielzahl von Zähnen (1220) und Rillen (1210) umfasst, die jeweils mit den Rillen und Zähnen jedes Dorns in Eingriff sind.

6. Walze gemäß Anspruch 5, **dadurch gekennzeichnet, dass** ein erstes Kaltradialspiel (J1) zwischen der Spitze der Zähne (1320; 1420) jedes Dorns (131; 141) und dem Boden der Rillen (1210) der Hülle (120) ausgebildet ist, und das ein zweites Kaltradialspiel (J2) zwischen der Spitze der Zähne (1220) der Hülle (120) und dem Boden der Rillen (1310; 1410) jedes Dorns (131; 141) ausgebildet ist.

7. Walze gemäß einem der Ansprüche 1 bis 6, **dadurch gekennzeichnet, dass** sie ferner ein ringförmiges Verstärkungselement (156; 166) umfasst, das um jeden Kranz oder jede Vielzahl von Kranzsegmenten (151, 152; 161, 162) angeordnet ist.

8. Walze gemäß Anspruch 7, **dadurch gekennzeichnet, dass** das ringförmige Verstärkungselement (156; 166) einen elastischen Kragen (1560, 1660) aus einem vorgespannten metallischen Material umfasst.

9. Walze gemäß Anspruch 7, **dadurch gekennzeichnet, dass** das ringförmige Verstärkungselement einen Kragen umfasst, der aus einem Material hergestellt ist, das einen Dehnungskoeffizienten gleich dem oder etwas größer als der Wärmedehnungskoeffizient des Kranzes oder der Kranzsegmente aufweist.

10. Walze gemäß Anspruch 1 oder 2, **dadurch gekennzeichnet, dass** sie einen Dorn (410) aus metallischem Material umfasst, der an jedem Ende durch einen Achsschenkel (411, 412) verlängert ist, wobei der Dorn eine Vielzahl von Zähnen (414) und Rillen (413) umfasst, und dass die zylindrische Hülle (420) um den Dorn (410) angeordnet ist und eine Vielzahl von Zähnen (4210, 4220) und Rillen umfasst, die jeweils mit den Rillen und Zähnen des Dorns in Eingriff sind.

11. Walze gemäß Anspruch 10, **dadurch gekennzeichnet, dass** ein erstes Kaltradialspiel zwischen der Spitze der Zähne des Dorns und dem Boden der Rillen der Hülle angeordnet ist und ein zweites Kaltradialspiel zwischen der Spitze der Zähne der Hülle und dem Boden der Rillen jedes Dorns angeordnet ist.

12. Walze gemäß Anspruch 1 oder 2, **dadurch gekennzeichnet, dass** die Walze zwei Achsschenkel umfasst, die an jeder Seite der Hülle befestigt sind, wobei jeder Achsschenkel durch eine Welle aus metallischem Material verlängert ist, wobei die Wellen und die Achsschenkel eine kegelstumpfförmige Kontaktfläche aufweisen.

13. Walze gemäß Anspruch 1 oder 2, **dadurch gekennzeichnet, dass** die Walze einen Dorn aus metallischem Material umfasst, der an jedem Ende durch einen Achsschenkel verlängert ist, wobei die zylindrische Hülle mit dem Dorn durch zwei konische feste Einpressringe jeweils an jeder Seite des Dorns verbunden ist.

14. Walze gemäß einem der Ansprüche 1 bis 13, **dadurch gekennzeichnet, dass** die zylindrische Hülle auf ihrer Außenfläche eine Zirkonschicht oder eine Chromkarbidschicht umfasst.

15. Kontinuierliche Glühlinie, **dadurch gekennzeichnet, dass** sie mindestens eine Walze gemäß einem der Ansprüche 1 bis 14 umfasst.

## Claims

1. A composite roller (100) of an annealing line comprising at least one spindle or drive shaft (130; 140) and a cylindrical housing (120), **characterized in that** the cylindrical housing (120) is made of a ceramic matrix composite (CMC) material consisting of a carbon fiber reinforcement compregnated by at least partially by silicon carbide, one phase of the silicon carbide material being present throughout the entire volume of the composite material of the housing.

2. The roller according to claim 1, **characterized in that** the cylindrical housing (120) is made up of a carbon-silicon carbide or carbon-carbon/silicon carbide composite material.

3. The roller according to claim 1 or 2, **characterized in that** each spindle (130; 140) is made from metal and **in that** said roller further comprises at least one element (150; 160) maintaining the housing (120) on the spindle (130; 140), said element comprising a ring or a plurality of ring segments (151, 152; 161, 162) fastened on one end of said housing, each ring or ring segment being extended by at least one elastic tongue (153; 163), the end of which is bearing on the spindle.

4. The roller according to any one of claims 1 to 3, **characterized in that** each spindle further comprises a frustoconical portion (132; 142) extended by a drive shaft (133; 143), the elastic tongue(s) (153; 163) of each ring or ring segment (151, 152; 161, 162) bearing on said frustoconical portion.

5. The roller according to any one of claims 1 to 4, **characterized in that** each spindle further comprises a mandrel (131; 141) including a plurality of teeth (1320; 1420) and grooves (1310; 1410) and **in that** the cylindrical housing (120) comprises a plurality of teeth (1220) and grooves (1210) respectively engaged with the grooves and teeth of each mandrel.

6. The roller according to claim 5, **characterized in that** a first radial play when cold (J1) is arranged between the apex of the teeth (1320; 1420) of each mandrel (131; 141) and the bottom of the grooves (1210) of the housing (120) and **in that** a second radial play when cold (J2) is arranged between the apex of the teeth (1220) of the housing (120) and the bottom of the grooves (1310; 1410) of each mandrel (131; 141).

7. The roller according to any one of claims 1 to 6, **characterized in that** it further comprises an annular reinforcing element (156; 166) placed around each ring or each plurality of ring segments (151, 152; 161, 162).

8. The roller according to claim 7, **characterized in that** the annular reinforcing element (156; 166) comprises an elastic collar (1560, 1660) made from a pre-stressed metal material.

9. The roller according to claim 7, **characterized in that** the annular reinforcing element comprises a collar made from a material having an expansion coefficient equal to or slightly greater than the thermal expansion coefficient of the ring or ring segments.

10. The roller according to claim 1 or 2, **characterized in that** it comprises a mandrel (410) made from metal extended at each end by a spindle (411, 412), said mandrel including a plurality of teeth (414) and grooves (413), and **in that** the cylindrical housing (420) is positioned around the mandrel (410) and comprises a plurality of teeth (4210, 4220) and grooves respectively engaged with the grooves and teeth of the mandrel.

11. The roller according to claim 10, **characterized in that** a first radial play when cold is arranged between the apex of the teeth of the mandrel and the bottom of the grooves of the housing, and **in that** a second radial play when cold is arranged between the apex of the teeth of the housing and the bottom of the grooves of each mandrel.

12. The roller according to claim 1 or 2, **characterized in that** said roller comprises two spindles fastened on each side of said housing, each spindle being extended by a metal shaft, the shafts and the spindles having a frustoconical contact surface.

13. The roller according to claim 1 or 2, **characterized in that** said roller comprises a metal mandrel extended at each end by a spindle, the cylindrical housing being connected to said mandrel by two conical fitting rings respectively fastened on each side of the mandrel.

14. The roller according to any one of claims 1 to 13, **characterized in that** the cylindrical housing comprises, on its outer surface, a layer of zirconium or a layer of chromium carbide.

15. A continuous annealing line, **characterized in that** it comprises at least one roller according to any one of claims 1 to 14.
